# EUROPEAN PATENT APPLICATION

(11) **EP 2 835 717 A2**
(43) Date of publication of application: **11.02.2015**
(21) Application number: 14180195.1
(22) Date of filing: 07.08.2014
(51) Int. Cl.: G06F 1/32

(54) **User device and method to process sensor output using a plurality of processors**

(30) Priority: 08.08.2013 KR 20130094086
(71) Applicant: Samsung Electronics Co., Ltd, Gyeonggi-do 443-742 (KR)
(72) Inventor: Kim, Nosoon, 443-742 Gyeonggi-do (KR); Choi, Bokun, 443-742 Gyeonggi-do (KR)
(74) Representative: Nederlandsch Octrooibureau

(57) **Abstract**

A user device for processing a sensor output is provided. The user device includes a first processor configured to sense a context awareness input based on the sensor output, a second processor configured to sense an effective input based on the sensor output, and a switch configured to convert a connection between the sensor output and the first processor to a connection between the sensor output and the second processor when the first processor that is connected to the sensor output is deactivated, and to convert the connection between the sensor output and the second processor to the connection between the sensor output and the first processor when the first processor is activated. The second processor is further configured to request activation of the first processor when the second processor senses the effective input.

## Description

### TECHNICAL FIELD

The present disclosure relates to a user device and method for processing a sensor output using a plurality of processors. More particularly, the present disclosure relates to a user device and method for analyzing and processing a sensor output so as to recognize a user's state, a situation, and the like, and providing a user with a corresponding service.

### BACKGROUND

An application processor that analyzes and processes a sensor output, and controls a user device based on the analyzed and processed sensor output may be driven by a battery. The battery of the user device has a limited capacity and thus, may set the application processor to be deactivated in a predetermined condition in order to save energy. In the state in which the application processor is deactivated, when a sensor output value is transferred from a sensor to the application processor, an interrupt may be generated. Through the generated interrupt, the application processor may be set to an activate state again. When the sensor output value that comes from the sensor is continuously monitored by the application processor, the application processor may be frequently activated and an overall amount of current consumed by the user device may increase. To overcome the increase of the amount of current consumed, there is provided a method that selectively uses a sensor for a predetermined scenario or deactivates a sensor based on user settings. However, when use of the sensor is allowed for the predetermined scenario instead of continuously turning the sensor on, implementation or utilization of a personal monitoring function or a context awareness function may be limited.

To overcome the above mentioned drawback, a method of additionally mounting a sensor hub has been provided. The sensor hub may be a Micro Control Unit (MCU), and may directly control a sensor irrespective of an inactive/active state of an application processor. The sensor hub requires a high-capacity hardware condition, and a software condition including additional formation and management of binary data. Therefore, when the sensor hub is added to a terminal, problems such as lack of accommodation space, an increase in unit cost, extra power consumption, extra cost associated with management and development of software may arise.

Accordingly, a user device and method for analyzing and processing a sensor output using a plurality of processors is desired.

The above information is presented as background information only to assist with an understanding of the present disclosure. No determination has been made, and no assertion is made, as to whether any of the above might be applicable as prior art with regard to the present disclosure.

### SUMMARY

Aspects of the present disclosure are to address at least the above-mentioned problems and/or disadvantages and to provide at least the advantages described below. Accordingly, an aspect of the present disclosure is to provide a user device and method for analyzing and processing a sensor output using a plurality of processors.

In accordance with an aspect of the present disclosure, a method of processing a sensor output in a user device including a first processor, a second processor, and a switch is provided. The method includes converting, by a switch, a connection between a sensor output and the first processor to a connection with the second processor when the first processor connected with the sensor output is deactivated, requesting, by the second processor, activation of the first processor when the second processor senses an effective input based on the sensor output, and converting, by the switch, the connection between the sensor output and the second processor to the connection between the sensor output and and the first processor when the first processor is activated.

In accordance with another aspect of the present disclosure, a user device for processing a sensor output is provided. The user device includes a first processor configured to sense a context awareness input based on a sensor output, a second processor configured to sense an effective input based on a sensor output, and a switch configured to converts a connection between a sensor output and the first processor to a connection between the sensor output and the second processor when the first processor that is connected to the sensor output is deactivated, and to convert the connection between the sensor output and the second processor to the connection between the sensor output and the first processor when the first processor is activated. The second processor is further configured to request activation of the first processor when the second processor senses the effective input.

Other aspects, advantages, and salient features of the disclosure will become apparent to those skilled in the art from the following detailed description, which, taken in conjunction with the annexed drawings, discloses various embodiments of the present disclosure

### BRIEF DESCRIPTION OF THE DRAWINGS

The above and other aspects, features, and advantages of certrain embodiments of the present disclosure will be more apparent from the following description taken in conjunction with the accompanying drawings, in which:
FIG. 1 illustrates a configuration of a user device according to an embodiment of the present disclosure;
FIG. 2 illustrates an operation of processing a sensor output using a plurality of processors according to an embodiment of the present disclosure;
FIG. 3 is a flowchart for processing a sensor output when a first processor is active according to an embodiment of the present disclosure; and
FIG. 4 is a flowchart for processing a sensor output when a first processor is deactivated according to an embodiment of the present disclosure.

The same reference numerals are used to represent the same elements throughout the drawings.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein may be made without departing from the scope and spirit of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to at least one of such surfaces.

Further, terms or words used in the description and claims below should not be interpreted as only general or dictionary meanings, but interpreted as meanings and concepts satisfying the technical spirit of the present disclosure based on a principle in that the inventor may appropriately define his or her present disclosure with a concept of the terms in order to describe the present disclosure in the best method. The various embodiments provided in the present specifications and components illustrated in the enclosed drawings are merely a few of the various embodiments of the present disclosure, and may not represent all the technical ideas of the present disclosure and, thus, it shall be appreciated that there are various equivalents and modifications of the present disclosure, as substitutions from the perspective of the present application.

In this specifications and claims, the term "comprise" shall not mean excluding other component elements or operations. The singular noun shall cover plural nouns unless otherwise noted. For example, a "sensor" may indicate a single sensor or may inclusively indicate two or more sensors. Also, an "input" may indicate a single input or may inclusively indicate two or more types of inputs. A suffix used for a component element, "unit", is assigned or used for ease of drafting the specifications, and may not have a distinguishing meaning or role.

In the specifications and claims, terms, such as "first", "second", and the like are used for distinguishing similar component elements, but does not intend to describe the component elements in the sequential or chronological manner. It should be noted that the terms may be replaced appropriately according to a condition, and the various embodiments of the present disclosure may be executed in different sequences from the sequence described or illustrated in the present specifications.

In the present specifications and claims, a "user device" is equipped with a display formed of at least one touch screen, and corresponds to an electronic device configured to execute an application and/or to display content. The user device may include, for example, a tablet Personal Computer (PC), a Portable Multimedia Player (PMP), a Personal Digital Assistant (PDA), a smart phone, a portable phone, a digital frame, and the like.

In the specifications and claims, a "sensor output" may include a signal output from a sensor placed outside a user device or at least one signal output from a sensor unit included in the user device.

In the specifications and claims, a "context awareness input" is a sensor output satisfying a predetermined condition. According to an embodiment of the present disclosure, when a first processor senses a context awareness input, each component element of a user device is controlled in order to provide a context awareness service.

In the specifications and claims, an "effective input" is a sensor output satisfying a predetermined condition. According to an embodiment of the present disclosure, an effective input and a context awareness input may be set to be different from each other. For example, it may be set that a processor senses a context awareness input when the output of a speed sensor indicates 10km/h - 20km/h and the output of an atmospheric pressure indicates 970hPa - 1000hPa, and a processor senses an effective input when the output of the speed sensor indicates 10km/h - 30km/h. According to an embodiment of the present disclosure, an effective input and a context awareness input may be set to be identical.

In the specifications and claims, "deactivation of a processor" indicates that a processor does not execute a corresponding operation although a signal is transferred to the processor, and has a meaning opposite to "activation of a processor". In the present specifications and claims, "deactivation" may be interchangeable with terms such as "sleep", "dormant", "standby", "hibernate", "energy save", and the like.

In the specifications and claims, an "Application Processor (AP)" refers to a processor where a platform such as Android, Linux, and the like is driven, and may control other component elements of a user device to provide a corresponding service when sensing a context awareness input.

In the present specifications and claims, a "Communication Processor (CP)" refers to a processor that processes a function of a communication modem part, and is referred to as a "Baseband Processor (BP)".

Hereinafter, various embodiments of the present disclosure will be described with reference to accompanying drawings. In the following description, it is noted that only the parts necessary for helping in understanding operations of various embodiments of the present disclosure will be described, and the description of other elements except for the necessary parts will be simplified or omitted in order to make the subject matter of the present disclosure clear. Here, the features of the present disclosure shall not be limited to the above described examples, but it should be appreciated that modifications in shape of each component or additional functions, which will be described below, are included in the present disclosure. In drawings, the size of a few elements may be enlarged for illustration, and may not be illustrated in proportion to the size.

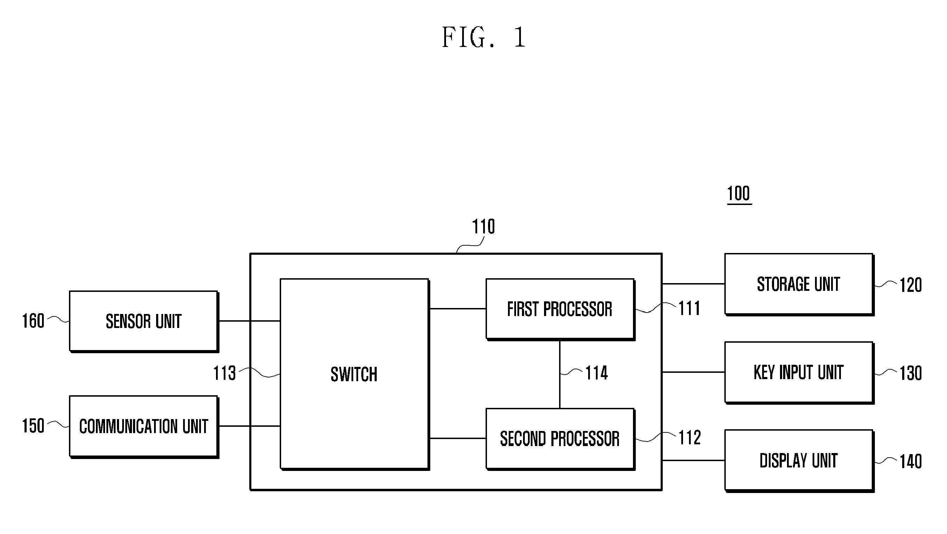

FIG. 1 illustrates a configuration of a user device according to an embodiment of the present disclosure.

Referring to FIG. 1, a user device 100 includes a controller 110, a storage unit 120, a key input unit 130, a display unit 140, a communication unit 150, and a sensor unit 160, but is not limited thereto.

The controller 110 may include a micro-processor or a micro-computer such as a Central Processing Unit (CPU), a Digital Signal Processor (DSP), and the like. The controller 110 may control supply of power to each component element of the user device 100 so as to execute initialization. According to an embodiment of the present disclosure, the controller 110 may include a first processor 111, a second processor 112, and a switch 113.

The first processor 111 and the second processor 112 may sense a context awareness input or an effective input, based on a sensor output. Sensing an effective input may include determining a gesture of a user of a user device based on a sensor output. The first processor 111 may control other component elements of the user device 100 so as to execute a corresponding operation when a context awareness input is sensed. The first processor 111 may be deactivated when a context awareness input is not sensed during a predetermined period of time or a predetermined input is sensed. Before being deactivated, the first processor 111 may inform a second processor 112 that the first processor 111 is to be deactivated. The second processor 112 may request activation of the first processor 111 when a context recognition input is sensed. When an activation request is received from the second processor 112, the first processor 111 which has been in a deactivated state is activated. According to an embodiment of the present disclosure, the second processor 112 may frequently wake up, and may determine the sensor output based on a polling scheme or an interrupt scheme. According to an embodiment of the present disclosure, the first processor 111 may correspond to an application processor. According to an embodiment of the present disclosure, the second processor 112 may correspond to a communication processor. Communication 114 between the first processor 111 and the second processor 112 may be executed through Inter Process Communication (IPC).

The switch 113 may connect a sensor output with the first processor 111 or the second processor 112. The switch 113 may convert a connection between the sensor output and the first processor 111 to a connection between the sensor output and the second processor 112 when the first processor 111 connected with the sensor output is deactivated. The switch 113 may convert a connection between the sensor output and the second processor 112 to a connection between the sensor output and the first processor 111 when the first processor 111 is activated. The switch may correspond to a General Purpose Input/Output (GPIO) selector. In this case, a GPIO selector control pin may be set. When the first processor 111 is active, the GPIO selector control pin is set to "HIGH" and a sensor output is connected with the first processor 111, and when the first processor 111 is deactivated, the GPIO selector control pin is set to "LOW" and a sensor output is connected with the second processor 112.

The storage unit 120 may include a cache memory, a D-RAM, an S-RAM, a flash memory, a magnetic disk, a storage device, an optical disc storage device, and the like. The storage unit 120 may store various application programs for supporting a user facility, and various types of key maps, menu maps, and the like for display on the display unit 140. The storage unit 120 may store information associated with a sensor output received by the first processor 111 and the second processor 112. After the first processor 111 is activated, the second processor 112 may transfer information stored in the storage unit in a state in which the first processor 111 is deactivated, to the first processor 111 through the IPC.

The key input unit 130 may include a plurality of input keys and function keys for receiving input of number or character information from a user of the user device 100 and for setting various functions. The function keys may include a direction key, a side key, and a shortcut key, which are set to execute particular functions. The user device 100 may further include a touch panel, a microphone, a button, a mouse, a remote controller, a jog wheel, jog switch, and the like, in addition to the key input unit 130, as a means for receiving input of a user input signal.

The display unit 140 may be formed of a Liquid Crystal Display (LCD), a Light Emitting Diode (LED), an Organic Light Emitted Diode (OLDE), and the like. The display unit 140 may be disposed on or below a touch panel. For example, a touch screen may be embodied in a form that includes a touch panel on the display unit 140. The display unit 140 displays various menus of the user device 100, and displays information input by a user or information provided to the user. The display unit 140 may display an image, a pointer image, an object, and the like for a user interface. The display unit 140 may display a qwerty key map including a plurality of keys, a DVORAK key map, a 3*4 key map, a 4*3 key map, and the like.

The communication unit 150 may execute communication channel formation for a voice call, communication channel formation for a video call, communication channel formation for transmission and reception of data such as images, messages, and the like, based on a control of the controller 110. The communication unit 150 may receive a sensor output from a sensor outside the user device, and may transfer the sensor output to the switch 113. The switch 113 may transfer a sensor output received from a sensor to one of the first processor 111 and the second processor 112.

The sensor unit 160 may include various sensors for recognizing user context. For example, the sensor unit 160 may include a geomagnetic sensor, a temperature sensor, an atmospheric pressure sensor, a proximity sensor, an illuminance sensor, a Global Positioning System (GPS), an acceleration sensor, an angular velocity sensor, a velocity sensor, a gravity sensor, an inclination sensor, a gyro sensor, a camera, and the like. According to an embodiment of the present disclosure, a sensor output includes an output signal of the sensor unit 160 or an output signal of an external sensor received through the communication unit 150. The controller 110 may provide a context awareness service based on a received sensor output, such as, a gesture input function through proximity recognition, 24h ambulatory exercise recognition, ambulatory monitoring and warning, standby state low power motion recognition, terminal pose recognition, lower power sensor fusion location recognition, environment information recognition, physical activity recognition, and the like.

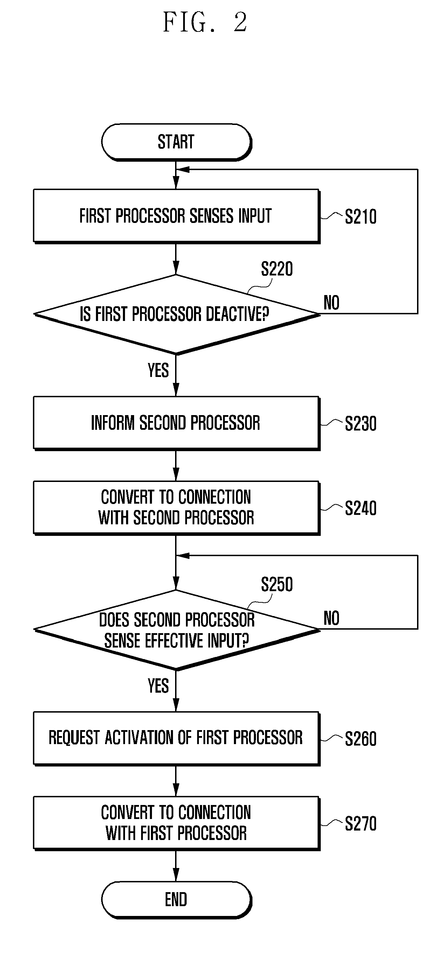

FIG. 2 illustrates an operation of processing a sensor output using a plurality of processors according to an embodiment of the present disclosure.

Referring to FIG. 2, when the first processor 111 is active, the first processor 111 senses various inputs in operation S210. The first processor 111 may sense a context awareness input based on a sensor output. Sensing a context awareness input may include determining a gesture of a user of a user device based on a sensor output.

The first processor 111 may be deactivated when the context awareness input is not sensed during a predetermined period of time or a predetermined input is sensed. Before being deactivated, the first processor 111 informs the second processor 112 that the first processor 111 is to be deactivated in operation S230. When the first processor 111 is deactivated, the switch 113 converts a connection between a sensor output and the first processor 111 to a connection between a sensor output and the second processor 112 in operation S240.

The second processor 112 connected with the sensor output determines whether an effective input is sensed, based on a sensor output. According to an embodiment of the present disclosure, the second processor 112 may frequently wake up, and may determine the sensor output based on a polling scheme and/or an interrupt scheme. In this operation, the first processor 111 is deactivated and thus, power consumption may be reduced. When the second processor 112 senses an effective input, based on a sensor output, the second processor 112 may request activation of the first processor 111 in operation S260. When the first processor 111 is activated, the switch 113 converts the connection between a sensor output and the second processor 112 to a connection between a sensor output and the first processor 111 in operation S270.

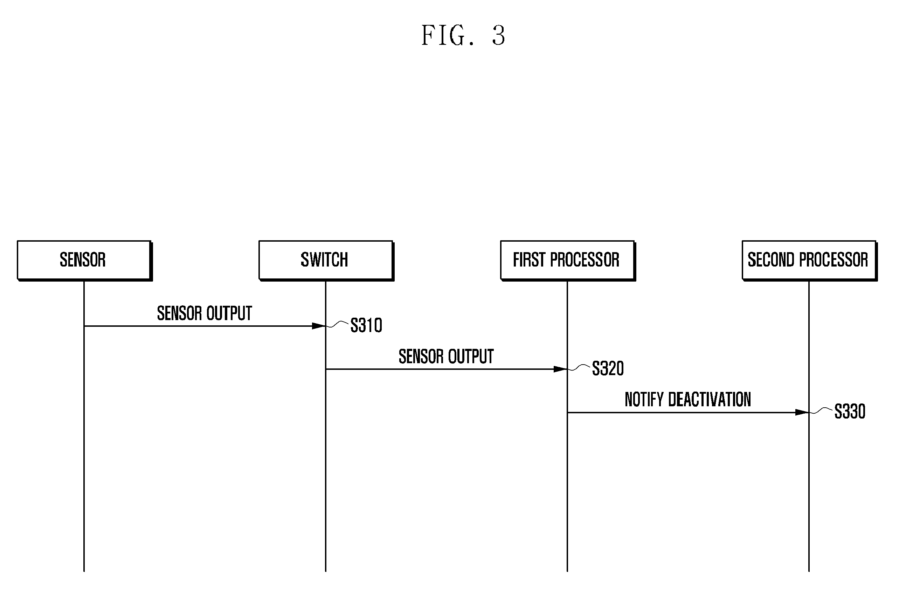

FIG. 3 is a flowchart for processing a sensor output when a first processor is active according to an embodiment of the present disclosure.

Referring to FIG. 3, a sensor output which is output by an external sensor and/or the sensor unit 160 of the user device may be transferred to the switch 113 first in operation S310. The switch 113 transfers a sensor output to the first processor in a state in which the first processor is active, in operation S320. The first processor 111 determines whether a context awareness input is sensed based on a received sensor output. The first processor may control each component element of the user device in order to provide the user of the user device with a service corresponding to a sensed context awareness input when the context awareness input is sensed. The first processor may not execute only sensing a context awareness input, and may sense another input so as to execute a corresponding operation. The first processor 111 may be deactivated when a predetermined input is sensed or a context awareness input is not sensed during a predetermined period of time. Before being deactivated, the first processor 111 informs the second processor 112 that the first processor 111 is to be deactivated in operation S330.

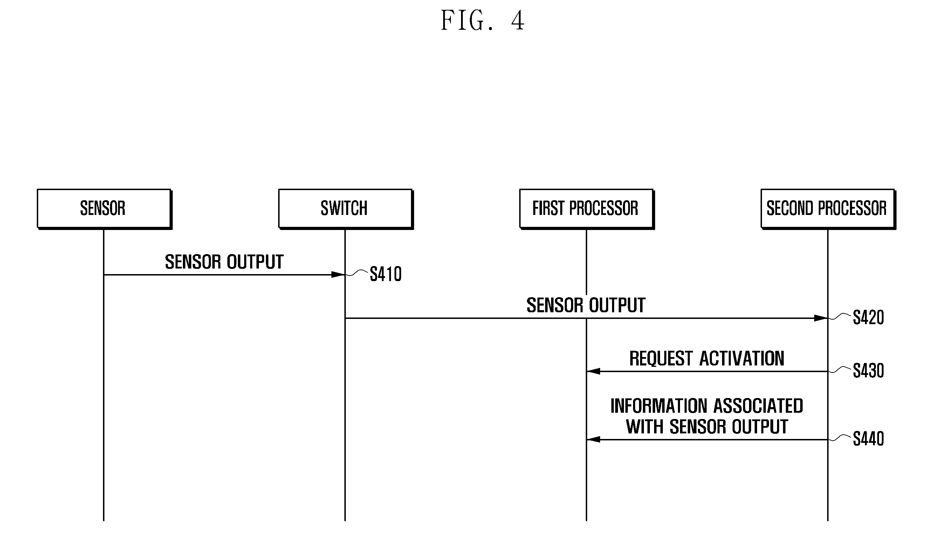

FIG. 4 is a flowchart for processing a sensor output when a first processor is deactivated according to an embodiment of the present disclosure.

Referring to FIG. 4, a sensor output outputted by an external sensor and/or a sensor unit of a user device may be transferred to the switch 113 first in operation S410. The switch 113 transfers a sensor output to the second processor 112 in a state in which the first processor 111 is deactivated, in operation S420. The second processor 112 determines whether an effective input is sensed, based on a received sensor output, and when the effective input is sensed, the second processor 112 may request activation of the first processor 111 in operation S430. According to an embodiment of the present disclosure, it may be embodied that the second processor 112 requests activation of the first processor 111 when a context awareness input is sensed. The second processor 112 may control the storage unit 120 to store information associated with a sensor output received by the processor 112 while the first processor 111 is deactivated. The second processor 112 may transfer the information stored in the storage unit 120 to the first processor through the IPC, simultaneously with or after requesting activation of the first processor 111, in operation S440. A process in which the first processor 111 activated in response to an activation request from the second processor 112 processes a sensor output has been described with reference to FIG. 3.

While the present disclosure has been shown and described with reference to various embodiments thereof, it will be understood by those skilled in the art that various changes in form and details may be made therein without departing from the spirit and scope of the present disclosure as defined by the appended claims and their equivalents.

## Claims

1. A method of processing a sensor output in a user device including a first processor, a second processor, and a switch, the method comprising:
converting, by the switch, a connection between the sensor output and the first processor to a connection between the sensor output and the second processor when the first processor connected with the sensor output is deactivated;
requesting, by the second processor, activation of the first processor when the second processor senses an effective input based on the sensor output; and
converting, by the switch, the connection between the sensor output and the second processor to the connection between the sensor output and the first processor when the first processor is activated.

2. The method of claim 1, further comprising:
transferring, by the second processor, information associated with the sensor output to the first processor, after the first processor is activated.

3. The method of claim 1, wherein the sensing of the effective input comprises:
determining a gesture of a user of the user device, based on the sensor output.

4. The method of claim 1, wherein, when the first processor does not sense a context awareness input during a predetermined period of time, the first processor is deactivated.

5. The method of claim 1, wherein, when the first processor senses a predetermined input, the first processor is deactivated.

6. A user device for processing a sensor output, the user device comprising:
a first processor configured to sense a context awareness input based on the sensor output;
a second processor configured to sense an effective input based on the sensor output; and
a switch configured to convert a connection between the sensor output and the first processor to a connection between the sensor output and the second processor when the first processor that is connected to the sensor output is deactivated, and to convert the connection between the sensor output and the second processor to the connection between the sensor output and the first processor when the first processor is activated,
wherein the second processor is further configured to request activation of the first processor when the second processor senses the effective input.

7. The user device of claim 6, wherein the first processor is an Application Processor (AP).

8. The user device of claim 6, wherein the second processor is a Communication Processor (CP).

9. The user device of claim 6, wherein the second processor is further configured to determine the sensor output through a polling scheme.

10. The user device of claim 6, wherein the second processor is further configured to determine the sensor output through an interrupt scheme.

11. The user device of claim 6, wherein the first processor is further configured to inform the second processor that the first processor is to be deactivated, before being deactivated.

12. The user device of claim 6, further comprising:
a storage unit configured to store information associated with a sensor output received by the second processor,
wherein the second processor is further configured to transfer the information stored in the storage unit to the first processor after the first processor is activated.

13. The user device of claim 6, wherein the sensing of the effective input corresponds determining a gesture of a user of the user device based on the sensor output.

14. The user device of claim 6, wherein, when the first processor does not sense the context recognition input during a predetermined period of time, the first processor is deactivated.

15. The user device of claim 6, wherein, when the first processor senses a predetermined input, the first processor is deactivated.
